# EUROPÄISCHE PATENTSCHRIFT

(11) **EP 1 287 217 B1**
(45) Veröffentlichungstag und Bekanntmachung des Hinweises auf die Patenterteilung: **21.01.2009**
(21) Anmeldenummer: 01951563.4
(22) Anmeldetag: 05.06.2001
(51) Int. Cl.: E04C 3/14, B27G 11/00, B27M 1/00, B27M 3/00, F26B 3/28

(54) **VERFAHREN UND VORRICHTUNG ZUR HERSTELLUNG VON VERLEIMTEN HOLZERZEUGNISSEN**
METHOD AND DEVICE FOR PRODUCING GLUED WOOD PRODUCTS
PROCEDE ET DISPOSITIF POUR PRODUIRE DES ARTICLES EN BOIS COLLES

(30) Priorität: 05.06.2000 DE 10027312
(43) Veröffentlichungstag der Anmeldung: 05.03.2003
(73) Patentinhaber: Dimter, Erwin, 89257 Illertissen (DE)
(72) Erfinder: Dimter, Erwin, 89257 Illertissen (DE)
(74) Vertreter: Pätzold, Herbert
(86) Internationale Anmeldenummer: PCT/EP2001/006388
(87) Internationale Veröffentlichungsnummer: WO 2001/094717

(56) Entgegenhaltungen:
- DE-A- 4 026 347
- DE-C- 4 222 866
- FI-B- 103 490
- US-A- 5 133 822
- US-A- 5 234 519
- US-A- 6 007 659

## Beschreibung

Die Erfindung betrifft ein Verfahren für die Herstellung von verleimten Holzerzeugnissen, insbesondere Brettschichtholzträgern gemäss dem Oberbegriff des Anspruchs 1. Ein derartiges Verfahren geht beispielsweise aus der FI 103490 B hervor.

Hölzer bzw. Bretter werden überwiegend vor der Verleimung in Stapeln, vorzugsweise mit Dampfenergie oder anderen Energieträgem, getrocknet und , gelangen dann zur Abkühlung auf Umgebungstemperatur in Zwischenlager, um anschließend bearbeitet zu werden.

Bei Verbindungen von Hölzern durch Verleimung spielt die Zeit bis zur vollständigen Abbindung bzw. Aufhärtung des verwendeten Leimes eine wesentliche Rolle. Je nach Leimtyp dauert die Aushärtung des Leims bis zu 12 Stunden, und mehr.

Aufgrund der langen Leirnabbindungszeit werden große Räume zur Zwischenlagerung benötigt, was besonders zeitaufwendig und teuer ist.

Zur Beschleunigung des Leim-Abbindevorganges gibt es aufwendige Verleimpressen die fahrbar sind und in eine Wärmekammer verschoben werden könnten. Es sind auch abgedeckte Pressen bekannt, die beheizbar sind. Dort werden die mit Leim versehenen, auf Raumtemperatur befindlichen Bretter zusammen mit den Pressen aufgeheizt, um eine kürzere Abbindezeit zur erreichen, die aber immer noch in der Regel 4-6 Stunden in Abhängigkeit vom Leim und der Brettbreite betragen kann. Diese Verfahren benötigen viel Energie und eine zu lange Durchlaufszeit. Ist eine solche Aufheizung nicht möglich, müssen der Vorschrift entsprechend, verleimte Brettschichthölzer mehrere Tage im temperierten Raum bei ca. 20° - 22° zwischengelagert werden, bis durch vollständige Leimaushärtung die Endfestigkeit der Brettschichthölzer sicher erreicht ist.

Es sind auch Durchlaufpressen bekannt, wo im Durchlauf mittels Dampf- oder Hochfrequenzheizung die vollständige Aushärtung des Leimes beschleunigt wird. Diese Verfahren benötigen aber sehr viel Platz und erfordern einen erheblichen Energieaufwand.

Die herkömmlichen Verfahren zur Herstellung von verleimten Holzerzeugnissen, insbesondere Brettschichtholzträgern von z.B. 5 bis 40m Länge und mit einer Breite von z.B. 20 cm und einer Höhe von 80cm bis 2 m benötigen viel Platz und erheblichen Zeitaufwand für den Leimabbindevorgang bei der Längs- Block oder Profilverleimung.

Aufgabe der Erfindung ist es daher, ein Verfahren der eingangs genannten Art anzugeben, mit dem mit geringerem Raumbedarf, minimalem Energieaufwand und in wesentlich kürzerer Zeit, verleimte Holzerzeugnisse Insbesondere Brettschichtholz wesentlich wirtschaftlich herstellbar ist.

Das erfindungsgemäße Verfahren ist im Anspruch 1 angegeben. Vorteilhafte Ausführungen nach der Erfindung ergeben sich aus den Unteransprüchen.

Hiernach wird die nach der Trocknung der Hölzer in diesen gespeicherte Wärmeenergie für die Verkürzung der Zeit zur vollständigen Leimaushärtung von verleimten Holzerzeugnissen, insbesondere von durch Längs- und Querverleimung von Brettern hergestellten Brettschichtholzträgern, genutzt. Die Trocknung der Bretter kann bei Temperaturen bis über 100°C vorgenommen werden. Holz ist ein schlechter Wärmeleiter und nimmt die Temperatur langsam auf und gibt diese ebenso langsam wieder ab. Die Trocknungszeit kann je nach Querschnitt 2-5 Tage in Anspruch nehmen. Die bei der Abkühlung frei werdende Energie wird somit erfindungsgemäß dem Produktionsprozeß zur Verringerung der Leimaushärtung zugeführt. Die aus der Trocken- oder Konditionierkammer kommenden, bis im Kem noch warmen Bretter von beispielsweise etwa 40° bis 50°C können vorteilhafterweise beidseitig gehobelt sein, bevor der vorzugsweise erwärmte Leim aufgebracht wird.

Die Leimabbinderzeit bei einer Holztemperatur von etwa 20°C befrägt etwa 12 Std. Bei einer Brettemperatur von 40°C beträgt die Abbindezeit dagegen weniger als 1 Stunde.

Bei 45°C Brettemperatur, beträgt die Abbindezeit herkömmlicher Leime ca. 30 Minuten.

Die Zeit für die Endaushärtung der Leimverbindung des z.B. mit 40 bis 60°C noch ausreichend trockenkammerwarmen Holzes und der maximal zulässigen statischen Belastung ist so kurz, daß diese Zeit vernachlässigt werden kann, weil schon der sofortige Transport des fertigen Holzerzeugnisses zur Baustelle vielfach länger ist, als die erforderliche Zeit für die Endaushärtung des dabei verwendeten Leims.

Die Durchlaufzeit der Bretter, insbesondere zur Herstellung von Bretschichtholzträgern bis zur Längsverleimung beträgt je nach Länge des herzustellenden Brettschichtholzträgers etwa 1 bis 2 Minuten. In eines Brettschichtholzpresse wird durch die erhöhte Brett temperatur der LeimAbbindeprozeß auf einen Bruchteil der früheren Zeit reduziert. Der verleimte Brettschichtholzträger kann nach der kurzzeitigen Aushärtung des Leims sofort weiterverarbeitet und der Baustelle oder dem Versand zugeführt werden. Ohne Ausnutzung der Trockenkammerwärme des Holzes beträgt die Durchlaufszeit mehrere lage. Mit Ausnutzung der Trockenkammerwärme kann die gesamte Durchlaufzeit auf wenige Stunden verkürzt werden.

Die Erfindung wird anhand eines Blockdiagramms näher beschrieben.

In dem Blockdiagramm ist eine herkömmliche Trockenkammer für Bretter mit 1 bezeichnet. Hierbei kann es sich um Vakuumtrockner mit Temperaturen von z.B. etwa 50 bis 60°C oder um normale Trockner mit Temperaturen von über 80°C handeln, in der naturfeuchte Hölzer und Bretter aus einem Lager 1' auf 10 bis 14% Holzfeuchte getrocknet werden.

Der Trockenkammer 1 ist eine Konditionierkammer 2 nachgeschaltet, die die ausreichend getrockneten, warmen Hölzer und Bretter zur Zwischenlagerung aufnimmt, bis sie noch ausreichend warm weiterverarbeitet werden. In der Konditionierkammer 2 wird die Wärme des Holzes beispielsweise auf etwa 40 bis 60° gehalten. Sofern die notwendige Wärme hierfür nicht durch frisch getrocknetes Holz direkt aus der Trockenkammer aufrecht erhalten werden kann, wird der Konditionierkammer 2 die fehlende Wärme zugeführt.

Der Konditionierkammer 2 ist ein erster Holzbearbeitungsraum 3 nachgeschaltet. Zur Fertigung von verleimten Holzerzeugnissen, insbesondere Brettschichtholzbalken, die aus einzeln übereinander gelegten und verleimten Brettern zusammengesetzt sind, werden die mit zB. etwa 40 bis 60°C noch ausreichend trockenkammerwarmen Bretter aus dem Konditionierraum 2 oder, wenn möglich-unmittelbar aus der Trockenkammer 1 abgezogen und in dem Holzbearbeitungsraum 3 auf herkömmliche Weise einzeln oder in Stapeln mittels eines Fräsers mit Keilzinken versehen. Die gefrästen und im Keitzinkenbereich beleimten, noch ausreichend trockenkammerwarmen Hölzer werden in einer Presse zusammengepreßt und beidseitig gehobelt.

In einem nachfolgenden zweiten Bearbeitungsraum 4 werden die noch ausreichend trockenkammerwarmen längsverleimten und beidseitig gehobetten Bretter auf die notwendige Länge zugeschnitten, zur Herstellung des Brettschichtholzes auf beide gehobelten Seiten mit Leim versehen und in einer bekannten Brettschichtholzpresse zu fertigen Brettschichtholzträgem verpreßt.

Da die Längs- und die anschließende Querverleimung mit Brettern vorgenommen wird, die direkt aus der Trockenkammer oder dem Konditionierraum kommend durch und durch und nicht nur oberflächlich etwa 40 bis 60°C warm sind, wird die Abbindung des Leimes vergleichsweise wesentlich beschleunigt. Hierzu trägt der Umstand bei, daß die Wärme aus den einzelnen Hölzern und Brettern nur sehr langsam nach außen abgegeben wird, die der beschleunigten Leimabbindung unmittelbar zur Verfügung steht. Die vollständige Abbindung bzw. Vollaushärtung des Leimes in den Keilzinken für die Längsverleimung und zwischen den aufeinander liegenden gehobelten Flächen der einzelnen Bretter ist dank der ausreichend trockenkammerwarmen Bretter bereits nach 20 bis 60 Minuten erreicht, so daß ein aus der Presse kommender Brettschichtholzträger sofort an seinen Bestimmungsort transportiert und dann vor Ort am Bau entsprechend den vorhandenen Gegebenheiten einsatzbereit weiterverarbeitet werden kann. Eine tagelange Zwischenlagerung des Brettschichtholzträgers im gepreßten Zustand zur vollständigen Aushärtung des Leims ist nicht länger erforderlich, was eine erhebliche Raum-und Kostenerspamis darstelft.

Vorzugsweise wird erfindungsgemäß trockenkammerwarmes Holz mit etwa 40 bis 60°C verleimt. Aber auch schon mit über 30°C warmen Holz werden beachtlich verkürzte Leimaushärtezeiten erzielt. Wenn ausnahmsweise kein trockenkammerwarmes Holz verfügbar ist, Kann trockenes, auf Umgebungstemperatur abgekühltes Vorratsholz oberflächlich mit ausreichender Tiefenwirkung erneut aufgewärmt, werden.

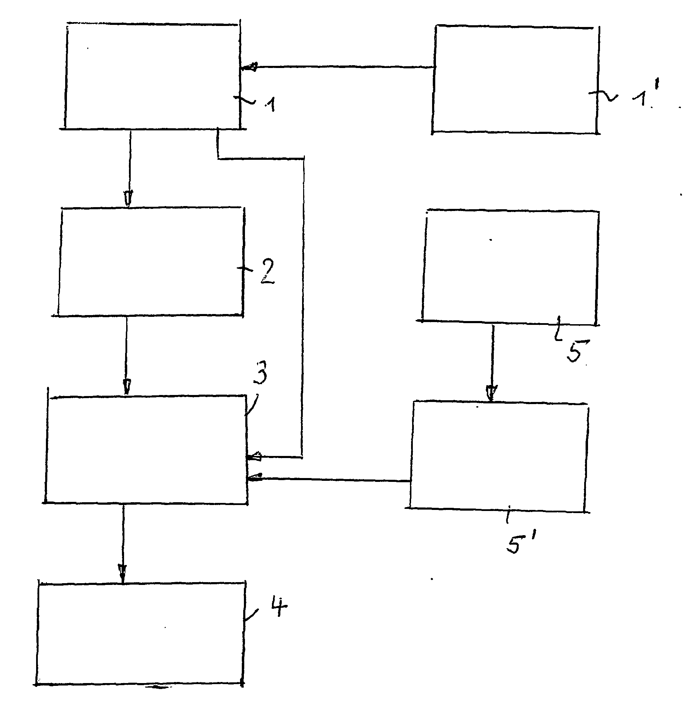

## Patentansprüche

1. Verfahren zur Herstellung von verleimten Holzerzeugnissen, insbesondere Brettschichtholzträgern aus Hölzern bzw. Brettern, die in einer Trockenkammer getrocknet sind,
**dadurch gekennzeichnet, dass**
die noch trockenkammerwarmen Hölzer mit einer Temperatur von über 30 C, insbesondere von etwa 40 bis 60 C, vorzugsweise um etwa 40 C, zu verleimten Holzerzeugnissen verarbeitet werden, wobei die in den Hölzern gespeicherte Trockenkammerwärme zur beschleunigten Leimabbindung und vollen Leimaushärtung verwendet wird und die trockenkammerwarmen Hölzer unmittelbar nach ihrer Trocknung in der Trockenkammer (1) in einem konditionierraum (2) zwischen gelagert werden, in dem die Wärme des Holzes beispielsweise auf etwa 40-60° gehalten wird, wobei die notwendige Wärme hierfür durch frish getsocknetes Holz direkt aus der Trockenkammer aufrecht erhalten wird.

2. Verfahren nach Anspruch 1,
**dadurch gekennzeichnet,**
**dass** die trockenkammerwarmen Hölzer unmittelbar nach ihrer Trocknung in der Trockenkammer (1) in einem Konditionierraum (2) zwischengelagert werden und mit einer noch gespeicherten Trockenkammerwärme über 30°C, insbesondere von 40 bis60° C, vorzugsweise um 40°C, an die Vorrichtungen zur Herstellung verleimter Holzerzeugnisse weitergeleitet werden.

3. Verfahren nach Anspruch 2,
**dadurch gekennzeichnet, dass**
dem Konditionierraum sofern die notwendige Wärme nicht durch frisch getrochnetes Holz direkt aus der Trochenkammer (1) aufrecht erhalten werden kann, Wärme in dem Maße zugeführt wird ass die Temperatur der trockenkammerwarmen Hölzer in dem Konditionierraum sofern die notwendige Wärme nicht durch frisch getrochnetes Holz direkt aus der Trochenkammer (1) aufrecht erhalten werden kann, auf über 30° C, insbesondere auf 40 bis 60° C, vorzugsweise auf etwa 40° C gehalten wird.

## Claims

1. Method for producing glued wood products, in particular glued laminated beams made of timbers or boards dried in a drying oven,
**characterised in that** timbers still hot from the drying oven with a temperature of more than 30°C, in particular about 40° to 60°C, preferably about 40°C, are processed into glued wood products, wherein the heat from the drying oven stored in the timbers is used to accelerate bonding of the glue and for complete curing of the glue, and directly after drying in the drying oven (1) the timbers hot from the drying oven are placed in interim storage in a conditioning chamber (2), in which the heat of the timber is held at about 40-60°C, for example, wherein the heat necessary for this is maintained by freshly dried timber directly out of the drying oven.

2. Method according to claim 1, **characterised in that** directly after drying in the drying oven (1), the timbers still hot from the drying oven are placed in interim storage in a conditioning chamber (2) and with a heat still stored from the drying oven of more than 30°C, in particular 40° to 60°C, preferably 40°C, are passed to the devices for producing glued wood products.

3. Method according to claim 2, **characterised in that** if the necessary heat cannot be maintained by freshly dried timber directly out of the drying oven (1), heat is supplied to the conditioning chamber (2) to the extent that the temperature of the timbers hot from the drying oven in the conditioning chamber (2) is held above 30°C, in particular at 40° to 60°C, preferably at about 40°C.

## Revendications

1. Procédé de production d'articles en bois collés, en particulier des planches en lamellé-collé en bois ou des planches, qui ont séché dans une chambre de séchage,
**caractérisé en ce que**
les bois encore à température de la chambre de séchage avec une température de plus de 30 °C, en particulier d'environ 40 à 60 °C, de préférence d'environ 40 °C, sont transformés en articles en bois collés, la chaleur de la chambre de séchage emmagasinée dans les bois étant utilisée pour accélérer la prise de la colle et le durcissement complet de la colle et les bois à température de la chambre de séchage étant entreposés directement après leur séchage dans la chambre de séchage (1) dans une chambre de conditionnement (2), dans laquelle la chaleur du bois est maintenue par exemple à environ 40 - 60. °C, la chaleur nécessaire pour ce faire étant maintenue par du bois fraîchement séché provenant directement de la chambre de séchage.

2. Procédé selon la revendication 1,
**caractérisé en ce**
**que** les bois à température de la chambre de séchage sont entreposés directement après leur séchage dans la chambre de séchage (1) dans une chambre de conditionnement (2) et transférés avec une chaleur de chambre de séchage encore emmagasinée de plus de 30 °C, en particulier de 40 à 60 °C, de préférence d'environ 40 °C, aux dispositifs de production d'articles en bois collés.

3. Procédé selon la revendication 2,
**caractérisé en ce que**
dans la mesure où la chaleur nécessaire ne peut pas être maintenue par du bois fraîchement séché provenant directement de la chambre de séchage (1), de la chaleur est amenée à la chambre de conditionnement (2) à mesure que la température des bois à température de la chambre de séchage dans la chambre de conditionnement (2) est maintenue à plus de 30 °C, en particulier de 40 à 60 °C, de préférence à environ 40 °C.
